# EUROPÄISCHE PATENTSCHRIFT

(11) **EP 3 323 194 B1**
(45) Veröffentlichungstag und Bekanntmachung des Hinweises auf die Patenterteilung: **09.04.2025**
(21) Anmeldenummer: 16745607.8
(22) Anmeldetag: 13.07.2016
(51) Int. Cl.: H02K 53/00, H02K 49/10

(54) **MAGNETMOTOR**
MAGNET MOTOR
MOTEUR À RELUCTANCE

(30) Priorität: 14.07.2015 CH 10332015
(43) Veröffentlichungstag der Anmeldung: 23.05.2018
(73) Patentinhaber: Del Curto, Marco, 7304 Maienfeld (CH)
(72) Erfinder: Del Curto, Marco, 7304 Maienfeld (CH)
(74) Vertreter: Römpler, Aldo
(86) Internationale Anmeldenummer: PCT/CH2016/000104
(87) Internationale Veröffentlichungsnummer: WO 2017/008174

(56) Entgegenhaltungen:
- EP-A2- 2 587 647
- WO-A1-2013/018610
- WO-A1-2015/029782
- DE-A1- 102005 059 652
- DE-A1- 102013 006 828
- DE-A1- 19 604 089
- JP-A- S63 136 987
- JP-A- S63 268 482
- US-A1- 2011 001 381

## Beschreibung

Die vorliegende Erfindung betrifft ein Magnetgetriebe mit mindestens zwei Magneten.

Der Stand der Technik ist im Wesentlichen aus US 2011/0001381 bekannt. Der darin beschriebene Hybrid Magnet Motor macht sich zwar ebenfalls die obige Wirkung zunutze, doch die im Folgenden beschriebene Erfindung wird dadurch weder vorweg genommen noch nahegelegt.

Dieser Stand der Technik geht vertieft auch aus WO 2015/029782 hervor. Hier sind mindestens zwei Magnete sowie mindestens einen in mindestens einer linearen Achse verschiebbaren Läufer und mindestens ein feststehender Stator vorhanden. Durch jeweilige Umpolung mindestens eines Magneten wird beim verschiebbaren Läufer eine lineare Bewegung erzeugt, die in eine Rotation umsetzbar ist.

Auf der Grundlage dieser Erkenntnisse setzt sich die Erfindung die Aufgabe ein Magnetfelder nutzendes Magnetgetriebe zu schaffen.

Der Das erfindungsgemässe Magnetgetriebe entspricht den kennzeichnenden Merkmalen des Patentanspruchs 1. Weitere vorteilhafte Ausbildungen des Erfindungsgedankens sind aus den abhängigen Patentansprüchen ersichtlich.

Nachfolgend werden bevorzugte Ausführungsbeispiele der Erfindung anhand der Zeichnung näher beschrieben.
- Fig. 1 - 3: zeigen Magnetpaarungen in drei verschiedenen Stellungen;
- Fig. 4: zeigt eine schematische Ansicht eines einen ersten Magneten aufweisenden Teils des erfindungsgemässen Magnetgetriebes;
- Fig. 5: zeigt, ebenfalls in schematischer Ansicht, den einen zweiten Magneten aufweisenden Teil dieses Magnetgetriebes;
- Fig. 6 - 9: zeigen je eine Draufsicht auf das Magnetgetriebe nach den Fig. 4 und 5 in verschiedenen Stellungen;
- Fig. 10 und 11: zeigen je eine Seitenansicht und eine Draufsicht des Magnetgetriebes nach den Fig. 6 - 9;
- Fig. 12 - 15: zeigen je einen Detailbereich des Magnetgetriebes nach den Fig. 10 und 11 im Schnitt;
- Fig. 16: zeigt den Funktionsablauf des erfindungsgemässen Magnetgetriebes;
- Fig. 17: zeigt den Funktionsablauf einer weiteren Ausführung.

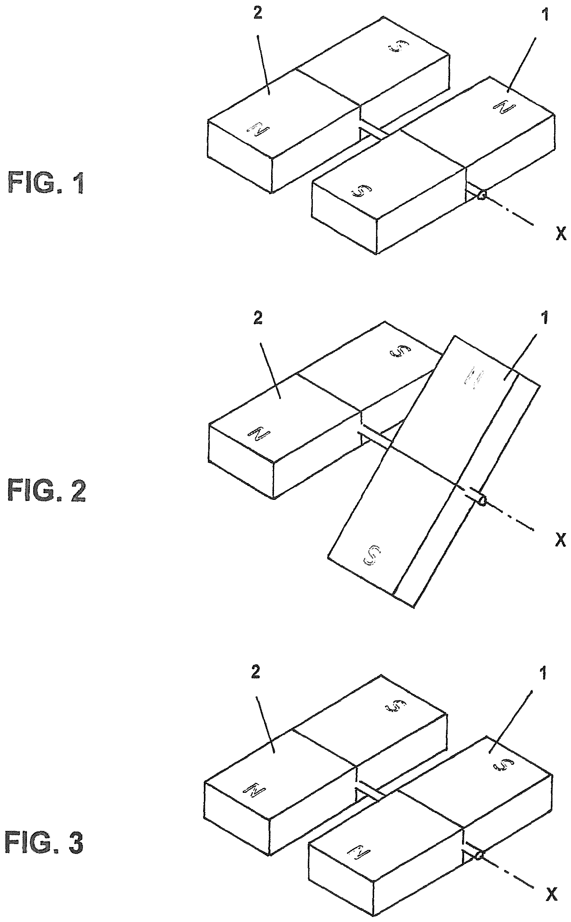

Das Magnetgetriebe weist mindestens eine Magnetpaarung mit mindestens je zwei Magneten 1 und 2 auf, beziehungsweise mindestens ein Antriebselement mit einer solchen Magnetpaarung. In den Fig. 1 - 3 ist, als Beispiel, deren bevorzugte Anordnung dargestellt, wobei die Magnete 1 und 2 parallel nebeneinander liegen und mindestens einer der beiden Magnete 1 um eine Achse X rotierbar ist. Dabei sind die Magnete 1 und 2 so parallel zueinander ausgerichtet, dass jeweils beide Magnetpole S und N beider Magnete 1 und 2 aufeinander wirken. Durch besagte Rotation gemäss Fig. 2 lässt sich die Stellung der beiden Magnete 1 und 2 so zueinander verändern, dass entweder, wie aus Fig. 1 ersichtlich, die Magnetpole S/N und N/S oder, wie aus Fig. 3 ersichtlich, die Magnetpole S/S und N/N nebeneinander liegen. In der ersten Stellung nach Fig. 1 ergibt sich zwischen den beiden Magneten 1 und 2 eine magnetisch anziehende Wirkung. In der zweiten Stellung nach Fig. 3 stossen sich die beiden Magnete 1 und 2 dagegen ab. Durch die Rotation kann somit wechselweise ein Anziehen oder ein Abstossen bewirkt werden. Dieses Anziehen oder Abstossen erfolgt in Längsrichtung der beschriebenen und dargestellten, die Rotationsachse bildenden, Achse X. Theoretisch denkbar wäre natürlich auch eine andere Anordnung der beiden Magnete und deren Polung, sofern sich dabei die beschriebene Wirkung des Abstossens und Anziehens ergibt.

Das vorgenannte Prinzip, aus dem sich eine Hubbewegung ergibt, bildet die Grundlage des im Folgenden beschriebenen Magnetgetriebes.

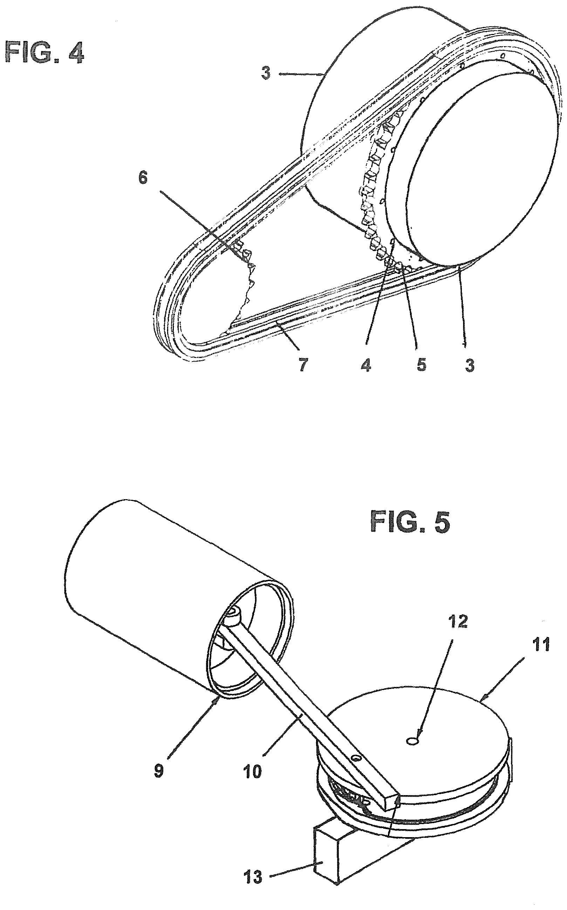

Fig. 4 zeigt einen ersten Teil des Magnetgetriebes, wo der erste Magnet 1, der hier nicht sichtbar in einem ersten Magnethalter 3 aufgenommen ist, rotiert wird. Das kann beispielsweise dadurch erfolgen, dass der erste Magnethalter 3 an seinem Umfang 4 einen Zahnkranz 5 aufweist, der von einem Antriebsritzel 6 angetrieben wird, entweder direkt oder über eine Kette oder einen Keilriemen 7. Der Antriebsritzel kann zum Beispiel mit der Welle eines Elektromotors verbunden sein.

Fig. 5 ist die schematische Ansicht eines zweiten Teils des Magnetgetriebes. Nämlich desjenigen, in dem die Hubbewegung in eine rotierende Antriebsbewegung umgesetzt wird. Letztere lässt sich auf vielfältige Art nutzen, so wie es auch bei anderen Getrieben bekannt ist. Der zweite Magnet 2 ist in einem in Fig. 5 nicht sichtbaren, zweiten Magnethalter 8 angeordnet. Der zweite Magnethalter 8 ist in einer in diesem Beispiel als Kolben ausgebildeten Führung 9 entlang besagter Achse X verschiebbar, so dass die Hubbewegung ausführbar ist. Die Hubbewegung wird wiederum an einen Kurbeltrieb mit einem Pleuel 10 übertragen, dessen translatorische Bewegung an ein Rad 11 weitergeleitet wird. Letzteres kann eine Kurbelwelle 12 antreiben. Das Rad 11 könnte auch als Teil dieser Kurbelwelle 12 bezeichnet werden. Die Kurbelwelle 12 kann auf einem Lagerelement 13 gelagert sein. Auf die weiteren, hier weniger gut erkennbaren Bauteile, wird später eingegangen.

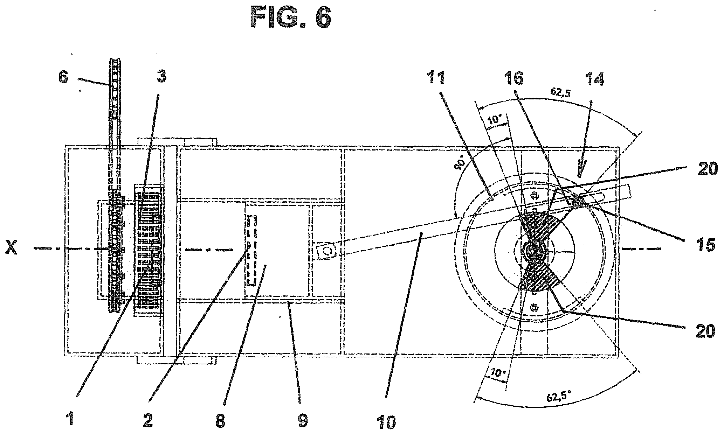

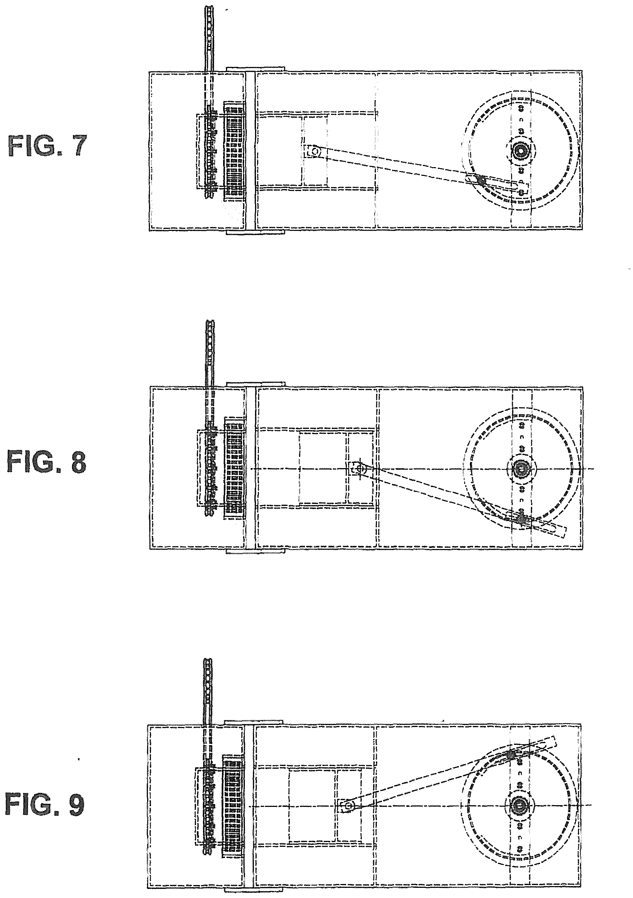

Die Fig. 6 - 9 zeigen eine Draufsicht auf das Magnetgetriebe mit dessen beiden Teilen, insbesondere dem ersten Magnethalter 3, der den ersten, rotierbaren Magneten 1 in sich aufnimmt, und dem zweiten Magnethalter 8, mit dem zweiten Magneten 2, der sich in der hier als Kolben ausgebildeten Führung 9 befindet. Der einzige Unterschied zwischen den Fig. 6 - 9 ist die jeweilige Stellung des Magnethalters 8 und dem daran angelenkten Pleuel 10, die sich am dem Magnethalter 8 entgegengesetzten Ende über den Umfang des sich drehenden Rades 11 bewegt. Die in Fig. 6 gestrichelt kenntlich gemachten Magnete 1 und 2 sollen diese nur andeuten. Die Darstellung ist weder für deren genaue Lage, noch Form, noch Grösse massgeblich. Die Magnete 1 und 2 werden bei der vorliegenden Ausführung in der Regel immer voneinander beabstandet sein, auch wenn sich deren Abstand während des Betriebs verändert.

Eine Besonderheit liegt gemäss Fig. 6 in der Verbindung zwischen dem Pleuel 10 und dem Rad 11. Diese ist so gelöst, dass der Pleuel 10 nicht, wie es bei einem Kurbeltrieb üblich ist, an einem einzigen Punkt am Umfang des Rades 11 unverrückbar befestigt ist. Vielmehr ist diese Verbindung so gestaltet, dass der Pleuel 10 seine Antriebsbewegung nur in mindestens einem bestimmten Bereich 20 des Rades 11 an dieses weitergibt. Zu diesem Zweck ist eine Verbindungseinrichtung 14 vorhanden, die so gestaltet ist, dass der Kraftschluss zwischen dem Pleuel 10 und dem Rad 11 während der Drehung des Rades 11 regelmässig aus- und wiedereingekuppelt wird. Sinnvoll und in der vorliegenden Ausführung vorgesehen ist eine Kraftübertragung in zwei Bereichen 20, somit wird dieses Einkuppeln an zwei einander annähernd gegenüber liegenden Bereichen 20 des Radumfangs, beziehungsweise der Radumdrehung erfolgen, wie das später noch erläutert wird. Wie aus Fig. 6 ersichtlich, liegen die beiden Bereiche 20 annähernd beidseitig der Achse X der Hubbewegung des Magnetgetriebes. Diese Bereiche 20 erstrecken sich jeweils über rund 1/6 des 360°-Umfangs des Rades 11. In der Variante nach Fig. 6 sind es beispielsweise 62,5 Winkelgrade.

Im vorliegenden Ausführungsbeispiel erfolgt das Einkuppeln durch mindestens einen zapfenartigen, am Rad 11 angeordneten Bolzen 15, der in mindestens eine Einrastung 16 des Pleuels 10 eingreift und aus dieser wieder lösbar ist. Die Einrastung 16 kann eine Bohrung sein, die wiederum in einer zum Beispiel nutartigen Kulisse angeordnet ist, so dass der Bolzen 15 ausserhalb der Bereiche 20 in dieser Kulisse läuft und somit der Pleuel 10 zwar kraftlos aber sicher geführt, der Drehung des Rades 11 folgt.

Die Ausführung mit dem Bolzen 15 am Rad 11 ist technisch am sinnvollsten. Es sei aber festgehalten, dass theoretisch der Bolzen 15 umgekehrt am Pleuel 10 und die jeweilige Einrastungen 16 am Rad 11 angeordnet sein könnten.

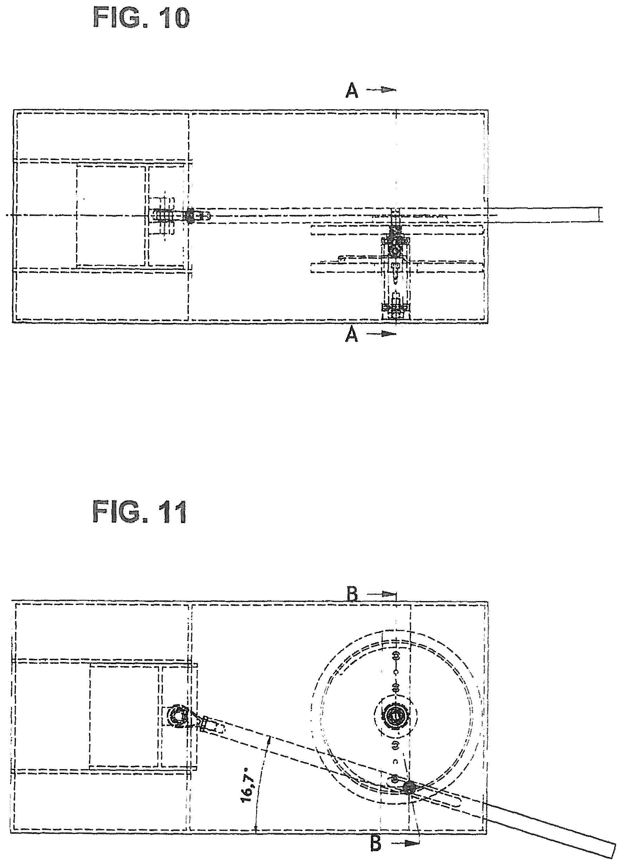

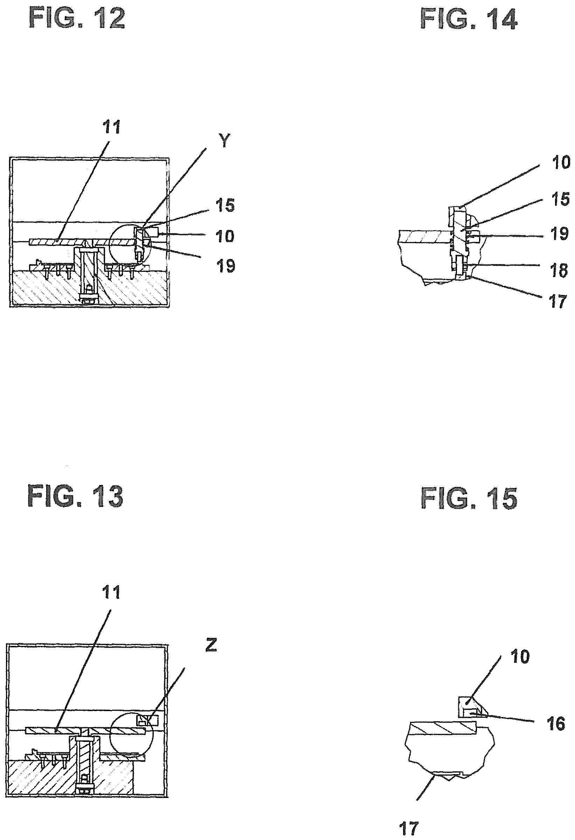

Zur Erläuterung dieses Bereiches des Magnetgetriebes sei zunächst auf Fig. 10 hingewiesen, die eine Seitenansicht des Magnetgetriebes darstellt. Fig. 11 zeigt denselben Bereich bei einer anderen Stellung des Kurbeltriebs. Die Fig. 12 zeigt einen Schnitt nach der Linie A - A in Fig. 10 und die Fig. 13 einen Schnitt nach der Linie B - B in Fig. 11. Zu sehen ist jeweils das Lager des Rades 11 und insbesondere der an diesem angeordnete Bolzen 15, der in der Position nach Fig. 12 in die Einrastung 16 des Pleuels 10 eingreift. Fig. 13 zeigt die Kulisse im Querschnitt, ausserhalb des Einrastungsbereiches.

Die vergrösserten Details Y und Z sind den Fig. 14 und 15 zu entnehmen. Der Bolzen 15 ist auf einer unterhalb des Rades 11 liegenden Bahn geführt. Zum Beispiel auf einer Nockenplatte 17 mittels eines Rillenkugellagers 18. Weiter ist der Bolzen 15 mit mindestens einer Feder 19 versehen, die ihn in die Einrastung 16 und/oder aus dieser heraus drückt. Der Bolzen 15 kann dadurch, im Zusammenwirken mit der Einrastung 16, mechanisch in Form einer Hubbewegung in und ausser Eingriff gebracht werden. Der Kopf des Bolzens 15 wird am Ende des jeweiligen Bereiches 20 wieder mechanisch aus der Einrastung 16 herausgehoben werden. Es sei hier eingefügt, dass die Hubbewegung des Bolzens 15 alternativ auch, mittels eines entsprechenden Zylinders, pneumatisch betätigt werden könnte. Als dritte Variante wäre auch ein elektrisch betätigter Hub mittels eines Magnetzylinders denkbar.

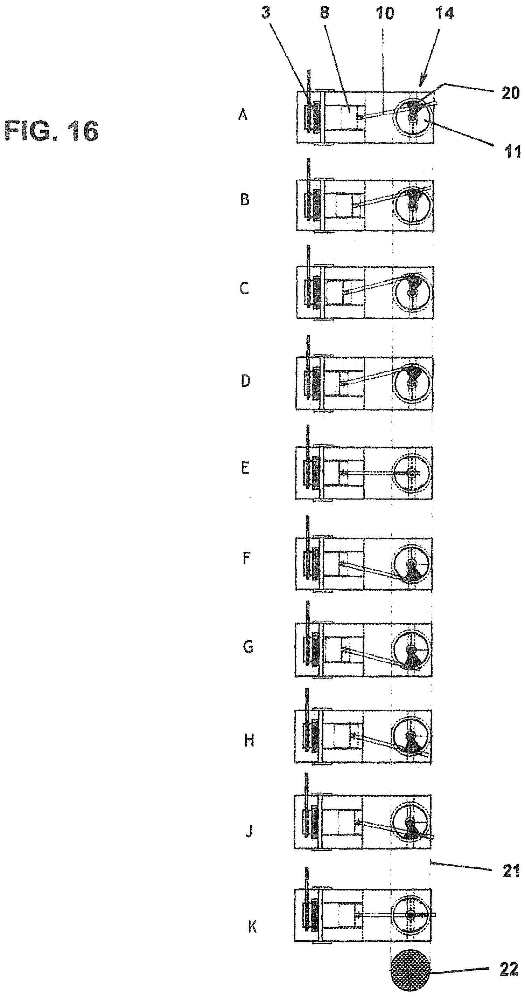

Der Sinn und die Funktion des regelmässigen aus- und wiedereinkuppeln der Verbindungseinrichtung 14, also beispielsweise des Bolzens 15 und der Einrastung 16, wird aus Fig. 16 deutlich. Wie eingangs erwähnt, kann das Magnetgetriebe eine Mehrzahl von Magnetpaarungen mit mindestens je zwei Magneten aufweisen. Fig. 16 erklärt nicht nur den Bewegungsablauf des Magnetgetriebes. So könnte man sich auch ein Magnetgetriebe vorstellen, der eine Reihe von Magnetpaarungen aufweist. Das heisst, die Buchstaben A - K können einerseits als Bewegungspositionen betrachtet werden. Andererseits können es in diesem Ausführungsbeispiel auch zehn in Reihe geschaltete Antriebselemente sein. Wie schon bei den Fig. 6 - 9, sind hier jeweils nur die beiden Magnethalter 3 und Magnethalter 8 des jeweiligen Antriebselementes sichtbar, sowie natürlich der jeweilige Pleuel 10 und das jeweilige Rad 11.

Wenn man die Fig. 16 als Schema eines Magnetgetriebes mit zehn Antriebselementen oder Magnetpaarungen betrachtet, so sind diese derart versetzt zueinander angeordnet, dass in dieser Momentaufnahme des Bewegungsablaufs das Rad 11 jeweils eine andere, gegenüber derjenigen der benachbarten Antriebselemente, versetzte Rotationsposition einnimmt. Selbstverständlich sind aber auch andere Varianten denkbar, bei der jeweils Gruppen von Antriebselemente mit gemeinsamer Rotationsposition vorhanden sind. Im letzteren Fall lägen also zwei, drei oder mehr Antriebselemente vor, die bezüglich der Rotationsposition des Rades 11 jeweils synchron laufen. Hierbei sind etliche Kombinationen möglich.

Zurück zu den Bewegungspositionen A - K. In der Darstellung nach Fig. 16 drehen sich die Räder 11 der Kurbeltriebe des Magnetgetriebes gegen den Uhrzeigersinn. Die Bereiche 20 der Kraftübertragung vom Pleuel 10 an das Rad 11 sind in Fig. 16 jeweils als dunkle Kreissektoren kenntlich gemacht. In der Bewegungsposition A rastet oder kuppelt die Verbindungseinrichtung 14 ein und das Rad 11 wird durch den Pleuel 10 im Uhrzeigersinn durch Ziehen gedreht. Dieses Ziehen setzt sich in den Bewegungspositionen B und C fort. In der Bewegungsposition D wird die Verbindungseinrichtung 14 wieder ausgehängt oder ausgekuppelt. Der Pleuel 10 dreht weiter, ohne eine Antriebsenergie an Rad 11 zu übertragen, und passiert in dieser ersten Ruhephase die Bewegungsposition E. Erst in der Bewegungsposition F kuppelt die Verbindungseinrichtung 14 wieder ein und das Rad 11 wird durch den Pleuel 10 im Uhrzeigersinn gedreht, jetzt nicht mehr durch Ziehen, sondern durch Stossen. Dieses Stossen setzt sich in den Bewegungspositionen G und H fort. In der Bewegungsposition J wird die Verbindungseinrichtung 14 wieder ausgekuppelt. Der Pleuel 10 dreht weiter, ohne eine Antriebsenergie an Rad 11 zu übertragen, und passiert in dieser nunmehr zweiten Ruhephase die Bewegungsposition K. Am Ende der zweiten Ruhephase setzt sich die Drehung des Rades 11 fort, indem bei der Bewegungsposition A die Verbindungseinrichtung 14 erneut einkuppelt und das Rad 11 zieht. Dieser Bewegungsablauf wiederholt sich kontinuierlich.

Aus Fig. 16 wird deutlich, dass sich die besagten Bereiche 20, in denen eine Antriebswirkung erzielt wird, in Pleuellängsrichtung jeweils seitlich am Rad 11 befinden. Somit dort, wo seitens des ziehenden oder stossenden Pleuels 10 die grösste Kraftentfaltung auf das Rad 11 erfolgt. In den übrigen Bereichen, namentlich in den Ruhephasen gemäss den Bewegungspositionen E und K, ist der Pleuel 10 insofern vom Rad 11 abgekoppelt, dass nur die kleinstmöglichen Reibungsverluste gegeben sind. Der Pleuel 10 ist jedoch auch in den Ruhephasen mit dem Rad verbunden, allerdings so ausgekuppelt, dass keine Antriebswirkung erzielt wird.

Die Bewegungsabschnitte A - D können zum Beispiel innert eines Gesamtzeitraums von 2 Sekunden erfolgen. Ebenso die Bewegungsabschnitte F - J. Die beiden Ruhephasen, die den Bewegungsabschnitten E und K entsprechen, können beispielsweise 1 - 2 Sekunden dauern. Somit ergibt sich eine Rotation ungefähr alle 6 - 8 Sekunden. Die Räder 11 können bei dieser Reihenanordnung mit einem Zahnkranz versehen sein, wobei eine gemeinsam über alle Räder 11 laufende Kette 21 oder ein Keilriemen deren Rotation an eine einzige Antriebswelle 22 weiterleitet. Falls diese Rotationskraft zur Erzeugung elektrischer Energie verwendet werden soll, kann es sich dabei um die Antriebswelle 22 eines Dynamos handeln.

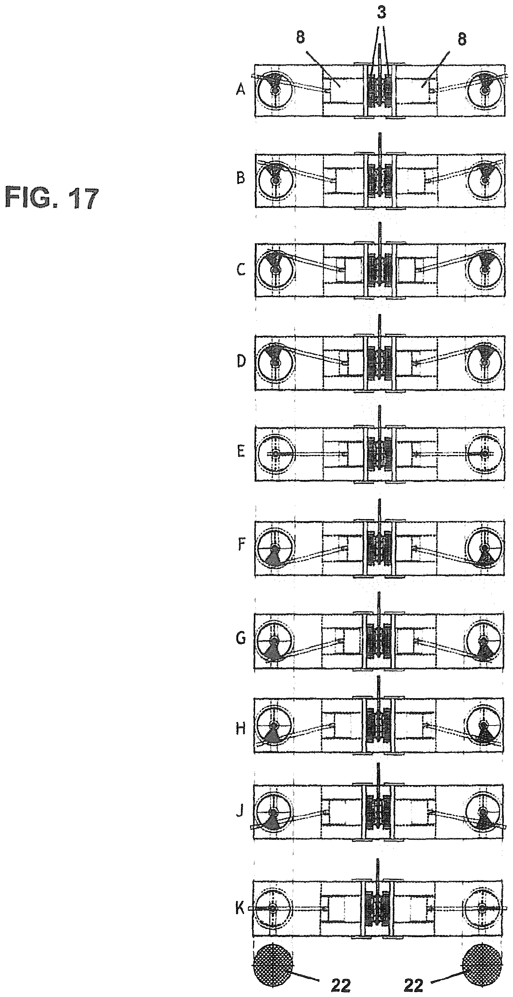

Gemäss Fig. 17 kann die Anordnung nach Fig. 16 auch durch eine zweite spiegelbildliche Reihe von Antriebselementen oder Magnetpaarungen ergänzt werden. In diesem Beispiel werden zwei Antriebswellen 22 oder Dynamos angetrieben. Auch hier gilt, die Anzahl der Antriebselemente, beziehungsweise Magnetpaarungen ist beliebig wählbar. Die rotierbaren Magnete, beziehungsweise deren Magnethalter 3, liegen jeweils innen und die eine Hubbewegung ausführenden Magnete, beziehungsweise deren Magnethalter 3, liegen aussen. Der den Bewegungspositionen A - K entsprechende Funktionsablauf ist gleich demjenigen nach Fig. 16.

Eine Besonderheit der Ausführung nach Fig. 17 ist, dass die beiden jeweils spiegelbildlich liegenden Magnethalter 3 der rotierenden Magnete 1 jeweils gemeinsam antreibbar sind, beispielsweise über einen gemeinsamen Zahnkranz 5. Der diesbezügliche Antrieb entspricht ansonsten demjenigen aus Fig. 4, er muss daher nicht nochmals erläutert werden.

Zur Ausführung nach Fig. 17 ist noch festzuhalten, dass der zeichnerisch dargestellte Abstand zwischen den jeweiligen, den ersten, rotierenden Magneten 1 tragenden ersten Magnethalter 3 anders als dargestellt sein kann. Die Wahl des optimalsten Abstands kann die Funktion des Magnetgetriebes begünstigen. Denkbar ist es auch, den jeweiligen Abstand zwischen den ersten Magnethaltern 3 veränderbar zu gestalten, was technisch einfach mittels einer linearen Führung erfolgen kann.

Selbstverständlich liegt es im Rahmen der Erfindung nach Patentanspruch 1 die einzelnen Bauteile des Magnetgetriebes auch anders als gezeichnet auszubilden.

Das betrifft insbesondere auch die Form, die Anordnung, die Ausrichtung und die Magnetisierung der Magnete 1 und 2. Möglich ist es beispielsweise, die Magnete 1 und 2 anders als gezeichnet anzuordnen, das heisst, nicht rechtwinklig, sondern in einem anderen Winkel zur Achse X. Das kann in der Ausführung nach Fig. 17 besonders in Bezug auf die ersten Magneten 1 und/oder ersten Magnethalter 3 sinnvoll sein. Möglich ist es auch, je Magnethalter 3 und/oder 8 mehr als je einen Magneten 1 und/oder 2 anzuordnen. Bei jeweils einer Mehrzahl von Magneten 1 und/oder 2 können diese allenfalls auch unterschiedlich angeordnet und/oder unterschiedlich ausgerichtet und/oder unterschiedlich stark magnetisiert sein. Letzteres kann sich auf die Magnete 1 und/oder 2 jeweils eines Antriebselementes oder auch auf die Magnete jeweils einer Reihe von Antriebselementen des Magnetgetriebes beziehen.

## Patentansprüche

1. Magnetgetriebe mit mindestens zwei Magneten (1, 2), **dadurch gekennzeichnet, dass** mindestens ein erster Magnet (1) um eine Achse (X) rotierbar angeordnet ist und mindestens ein zweiter Magnet (2) entlang einer Achse derart verschiebbar angeordnet ist, dass der Abstand zwischen den mindestens zwei Magneten (1, 2) veränderbar ist, wobei durch die besagte Rotation die Lage der Magnetpole S und N des ersten Magneten (1) gegenüber dem zweiten Magneten (2) veränderbar ist und dadurch dieser zweite Magnet (2) durch Anziehen und Abstossen in eine sich wiederholende Hubbewegung versetzbar ist und wobei der mindestens eine, entlang einer Achse (X) verschiebbare zweite Magnet (2) mit einem Pleuel (10) eines Kurbeltriebs zusammenwirkt, wodurch dessen translatorische Bewegung an ein Rad (11) übertragbar ist, **dadurch gekennzeichnet, dass** der Pleuel (10) und das Rad (11) derart mit einer ein- und auskuppelbaren Verbindungseinrichtung (14) verbunden sind, dass ein antriebswirksamer Kraftschluss zwischen dem Pleuel (10) und dem Rad (11) nur in mindestens einem vorgegebenen Bereich (20) erfolgt und somit die Antriebskraft nur im entsprechenden, mindestens einen Bereich (20) vom Pleuel (10) zum Rad (11) weiterleitbar ist.

2. Magnetgetriebe nach Anspruch 1, **dadurch gekennzeichnet, dass** die Achse (X), in der der erste Magnet (1) rotierbar ist, dieselbe Achse (X) ist, in welcher der zweite Magnet (2) verschiebbar ist.

3. Magnetgetriebe nach Anspruch 1 oder 2, **dadurch gekennzeichnet, dass** die mindestens zwei Magnete (1, 2) mit veränderbarem Abstand parallel nebeneinander angeordnet sind, wobei durch die besagte Rotation des ersten Magneten (1) die Stellung der beiden Magnete (1, 2) so zueinander veränderbar ist, dass entweder die Magnetpole S/N und N/S der beiden Magnete (1, 2) oder die Magnetpole S/S und N/N der beiden Magnete (1, 2) nebeneinander liegen.

4. Magnetgetriebe nach Anspruch 1 oder 2, **dadurch gekennzeichnet, dass** mindestens einer der jeweils mindestens zwei Magnete (1, 2) in einem Winkel ausgerichtet ist, der zwischen der Ausrichtung der Achse (X), in der der erste Magnet (1) rotierbar ist, und einem rechten Winkel zu dieser Achse (X) liegt.

5. Magnetgetriebe nach einem der Ansprüche 1 - 4, **dadurch gekennzeichnet, dass** mindestens ein erster Magnet (1) in einem ersten, rotierbaren Magnethalter (3) aufgenommen ist und mindestens ein zweiter Magnet (2) in zweiten Magnethalter (8), der entlang einer Führung (9) in besagter Achse (X) linear verschiebbar ist.

6. Magnetgetriebe nach einem der Ansprüche 1 - 5, **dadurch gekennzeichnet, dass** der Pleuel (10), das Rad (11) und/oder die Verbindungseinrichtung (14) so ausgelegt sind, dass ein antriebswirksamer Kraftschluss zwischen dem Pleuel (10) und dem Rad (11) in zwei einander annähernd gegenüber liegenden Bereichen (20) der Radumdrehung vorhanden ist, wodurch in diesen beiden Bereichen (20) wechselweise jeweils ein Ziehen oder ein Stossen des Rades (11) durch den Pleuel (10) bewirkbar ist.

7. Magnetgetriebe nach Anspruch 6, **dadurch gekennzeichnet, dass** die beiden Bereiche (20) des Kraftschlusses annähernd beidseitig der Achse (X) der Hubbewegung des jeweils zweiten Magneten (2) des Magnetgetriebes liegen.

8. Magnetgetriebe nach Anspruch 6 oder 7, **dadurch gekennzeichnet, dass** sich die beiden Bereiche (20) des Kraftschlusses jeweils über annähernd 1/6 des 360°-Umfangs des Rades (11) erstrecken.

9. Magnetgetriebe nach Anspruch 8, **dadurch gekennzeichnet, dass** sich die beiden Bereiche (20) des Kraftschlusses jeweils über 62,5 Winkelgrade erstrecken.

10. Magnetgetriebe nach einem der Ansprüche 5 - 9, **dadurch gekennzeichnet, dass** die Verbindungseinrichtung (14) mindestens einen Bolzen (15) aufweist, der in mindestens eine Einrastung (16) eingreift und aus dieser wieder lösbar ist.

11. Magnetgetriebe nach Anspruch 10, **dadurch gekennzeichnet, dass** die Verbindungseinrichtung (14) einen am Rad (11) angeordneten Bolzen (15) aufweist, der in mindestens eine Einrastung (16) des Pleuels (10) eingreift und aus dieser wieder lösbar ist.

12. Magnetgetriebe nach Anspruch 10 oder 11, **dadurch gekennzeichnet, dass** die Einrastung (16), zum Beispiel eine Bohrung, in einer Kulisse angeordnet ist, so dass der Bolzen (15) ausserhalb der Bereiche (20) des Kraftschlusses, in denen er in die Einrastung (16) eingreift, in dieser Kulisse geführt ist.

13. Magnetgetriebe nach einem der Ansprüche 10 - 12, **dadurch gekennzeichnet, dass** der Bolzen (15) auf einer unterhalb des Rades (11) liegenden Bahn geführt ist.

14. Magnetgetriebe nach Anspruch 13, **dadurch gekennzeichnet, dass** der Bolzen (15) auf einer Nockenplatte (17) mittels eines Rillenkugellagers (18) geführt ist.

15. Magnetgetriebe nach einem der Ansprüche 10 - 14., **dadurch gekennzeichnet, dass** der Bolzen (15) mit einer Feder (19) versehen ist, durch die er in die Einrastung (16) drückbar und/oder heraushebbar ist.

16. Magnetgetriebe nach einem der Ansprüche 10 - 14., **dadurch gekennzeichnet, dass** der Bolzen (15) mit einem Zylinder verbunden ist, durch den er pneumatisch in die Einrastung (16) drückbar und/oder heraushebbar ist.

17. Magnetgetriebe nach einem der Ansprüche 10 - 14., **dadurch gekennzeichnet, dass** der Bolzen (15) mit einem Zylinder verbunden ist, durch den er elektrisch oder elektromagnetisch in die Einrastung (16) drückbar und/oder heraushebbar ist.

## Claims

1. Magnetic gear unit having at least two magnets (1, 2), **characterized in that** at least one first magnet (1) is arranged such that it can rotate about an axis (X) and at least one second magnet (2) is arranged in a displaceable manner along an axis, in such a way that the distance between the at least two magnets (1, 2) can be changed, wherein owing to said rotation, the position of the magnet poles S and N of the first magnet (1) changes in relation to the second magnet (2), as a result of which this second magnet (2) can be set into a repetitive reciprocating movement by attraction and repulsion and wherein the at least one second magnet (2), which can be displaced along an axis (X), interacts with a connecting rod (10) of a crank drive, whereby the translatory movement thereof is transferable to a wheel (11), **characterized in that** the connecting rod (10) and the wheel (11) are connected to a connecting device (14) that can be engaged and disengaged, in such a way that a drive-effective frictional connection between the connecting rod (10) and the wheel (11) takes place only in at least one predetermined region (20) and thus the drive force can only be transmitted from the connecting rod (10) to the wheel (11) in the corresponding, at least one region (20).

2. Magnetic gear unit according to Claim 1, **characterized in that** the axis (X), in which the first magnet (1) can be rotated, is the same axis (X) in which the second magnet (2) can be displaced.

3. Magnetic gear unit according to Claim 1 or 2, **characterized in that** the at least two magnets (1, 2) are arranged parallel to each other at an adjustable distance apart, wherein the position of the two magnets (1, 2) relative to each other can be changed by the said rotation of the first magnet (1), such that either the magnetic poles S/N and N/S of the two magnets (1, 2) or the magnetic poles S/S and N/N of the two magnets (1, 2) are adjacent to each other.

4. Magnetic gear unit according to Claim 1 or 2, **characterized in that** at least one of the at least two magnets (1, 2) is aligned at an angle that is between the alignment of the axis (X) in which the first magnet (1) can be rotated and a right angle to this axis (X).

5. Magnetic gear unit according to any one of Claims 1 - 4, **characterized in that** at least one first magnet (1) is mounted in a first, rotatable magnet holder (3) and at least one second magnet (2) is mounted in a second magnet holder (8), which can be displaced linearly along a guide (9) in said axis (X).

6. Magnetic gear unit according to any one of Claims 1 - 5, **characterized in that** the connecting rod (10), the wheel (11) and/or the connecting device (14) are designed in such a way that a drive-effective frictional connection between the connecting rod (10) and the wheel (11) takes place in two regions (20) of the wheel revolution which are situated approximately opposite one another, as a result of which the wheel (11) can be alternately pulled or pushed by the connecting rod (10) in these regions (20).

7. Magnetic gear unit according to Claim 6, **characterized in that** the two regions (20) of the frictional connection are located approximately on both sides of the axis (X) of the reciprocating movement of the second magnet (2) of the magnetic gear unit.

8. Magnetic gear unit according to Claim 6 or 7, **characterized in that** the two regions (20) of the frictional connection each extend over approximately 1/6 of the 360° circumference of the wheel (11).

9. Magnetic gear unit according to Claim 8, **characterized in that** the two regions (20) of the frictional connection each extend over 62.5 degrees of angle.

10. Magnetic gear unit according to any one of Claims 5 - 9, **characterized in that** the connecting device (14) has at least one bolt (15), which engages in at least one latching slot (16) and can be released from it again.

11. Magnetic gear unit according to Claim 10, **characterized in that** the connecting device (14) has a bolt (15) arranged on the wheel (11), which engages in at least one latching slot (16) of the connecting rod (10) and can be released from it again.

12. Magnetic gear unit according to Claim 10 or 11, **characterized in that** the latching slot (16), for example a drilled hole, is arranged in a connecting link, so that outside the regions (20) of the frictional connection in which it engages in the latching slot (16), the bolt (15) is guided in this connecting link.

13. Magnetic gear unit according to any one of claims 10 - 12, **characterized in that** the bolt (15) is guided on a track located below the wheel (11).

14. Magnetic gear unit according to Claim 13, **characterized in that** the bolt (15) is guided on a cam plate (17) by means of a grooved ball bearing (18).

15. Magnetic gear unit according to any one of Claims 10 - 14, **characterized in that** the bolt (15) is provided with a spring (19) by means of which the bolt can be pressed into and/or lifted out of the latching slot (16).

16. Magnetic gear unit according to any one of Claims 10 - 14, **characterized in that** the bolt (15) is connected to a cylinder, by means of which the bolt can be pressed into and/or lifted out of the latching slot (16) pneumatically.

17. Magnetic gear unit according to any one of Claims 10 - 14, **characterized in that** the bolt (15) is connected to a cylinder, by means of which the bolt can be pressed into and/or lifted out of the latching slot (16) electromagnetically.

## Revendications

1. Transmission magnétique avec au moins deux aimants (1, 2), ***caractérisée en ce qu'**au* moins un premier aimant (1) est disposé pouvant tourner autour d'un axe (X) et au moins un deuxième aimant (2) est disposé pouvant être déplacé le long d'un axe de telle manière que l'intervalle entre au moins les deux aimants (1, 2) peut être modifié, sachant que par ladite rotation la position des pôles magnétiques S et N du premier aimant (1) peut être modifiée par rapport au deuxième aimant (2) et que de ce fait ce deuxième aimant (2) peut être déplacé par traction et poussée dans un mouvement de course se répétant et sachant qu'au moins un deuxième aimant (2) déplaçable le long d'un axe (X) coopère avec une bielle (10) d'un mécanisme à manivelle, un mouvement translatoire de celui-ci pouvant être transmis à une roue (11), ***caractérisée en ce que*** la bielle (10) et la roue (11) sont reliés à un dispositif de liaison pouvant être couplé et découplé (14) de telle manière qu'une conjugaison de forces active en entraînement a lieu entre la bielle (10) et la roue (11) uniquement dans au moins une zone prédéfinie (20) et la force d'entraînement ne peut être ainsi transmise que dans au moins une zone correspondante (20) de la bielle (10) à la roue (11).

2. Transmission magnétique selon la revendication 1, ***caractérisée en ce que*** l'axe (X) dans lequel le premier aimant (1) peut tourner, est le même axe (X) dans lequel le deuxième aimant (2) peut être déplacé.

3. Transmission magnétique selon la revendication 1 ou 2, ***caractérisée en ce qu'**au* moins les deux aimants (1, 2) sont disposés parallèlement l'un à côté de l'autre à une distance variable, sachant que par ladite rotation du premier aimant (1), la position des deux aimants (1, 2) l'un par rapport à l'autre peut être modifiée de telle sorte que soit les pôles magnétique S/N et N/S des deux aimants (1, 2) soit les pôles magnétiques S/S et N/N des deux aimants (1, 2) se trouvent les uns à côté des autres.

4. Transmission magnétique selon la revendication 1 ou 2, ***caractérisée en ce qu'**au* moins un aimant des deux aimants respectifs au moins (1, 2), est orienté dans un angle, qui se situe entre l'orientation de l'axe (X), dans laquelle le premier aimant (1) peut tourner, et un angle droit par rapport à cet axe (X).

5. Transmission magnétique selon l'une quelconque des revendications 1 à *4, **caractérisée en ce qu'**au* moins un premier aimant (1) est logé dans un premier support d'aimant pouvant tourner (3) et au moins un deuxième aimant (2) dans un deuxième support d'aimant (8), qui peut être déplacé de façon linéaire le long d'un guidage (9) dans ledit axe (X).

6. Transmission magnétique selon l'une quelconque des revendications 1 - *5, **caractérisée en ce que*** la bielle (10), la roue (11) et/ou le dispositif de liaison (14) sont conçus de telle manière qu'il existe une conjugaison de forces active en entraînement entre la bielle (10) et la roue (11) dans deux zones à peu près opposées (20) de la rotation de roue, une traction ou une poussée de la roue (11) par la bielle (10) pouvant être respectivement causée alternativement dans ces deux zones (20).

7. Transmission magnétique selon la revendication 6, ***caractérisée en ce que*** les deux zones (20) de l'adhérence par friction se situent à peu près des deux côtés de l'axe (X) de mouvement de course du deuxième aimant respectif (2) de la transmission magnétique.

8. Transmission magnétique selon la revendication 6 ou 7, ***caractérisée en ce que*** les deux zones (20) de conjugaison de forces s'étendent respectivement sur à peu près 1/6 de la périphérie à 360° de la roue (11).

9. Transmission magnétique selon la revendication 8, ***caractérisée en ce que*** les deux zones (20) de conjugaison de forces s'étendent respectivement sur 62.5 degrés d'angle.

10. Transmission magnétique selon l'une quelconque des revendications 5 - *9, **caractérisée en ce que*** le dispositif de liaison (14) comporte au moins un axe (15), qui vient en prise dans au moins un encliquetage (16) et peut être à nouveau dégagé de celui-ci.

11. Transmission magnétique selon la revendication 10, ***caractérisée en ce que*** le dispositif de liaison (14) comporte un axe (15) disposé sur la roue (11), qui vient en prise dans au moins un encliquetage (16) de la bielle (10) et peut être à nouveau dégagé de celui-ci.

12. Transmission magnétique selon la revendication 10 ou 11, ***caractérisée en ce que*** l'encliquetage (16), par exemple un alésage, est disposé dans une coulisse de telle manière que l'axe (15) est guidé dans cette coulisse en dehors des zones (20) de conjugaison de forces, dans lesquelles il vient en prise dans l'encliquetage (16).

13. Transmission magnétique selon l'une quelconque des revendications 10 - *12, **caractérisée en ce que*** l'axe (15) est guidé sur une trajectoire se situant en dessous de la roue (11).

14. Transmission magnétique selon la revendication 13, ***caractérisée en ce que*** l'axe (15) est guidé sur un plateau de came (17) au moyen d'un roulement à billes rainuré (18).

15. Transmission magnétique selon l'une quelconque des revendications 10 *- 14, **caractérisée en ce que*** l'axe (15) est doté d'un ressort (19) par lequel il peut être comprimé dans l'encliquetage (16) et/ou sorti.

16. Transmission magnétique selon l'une quelconque des revendications 10 - *14, **caractérisée en ce que*** l'axe (15) est relié à un vérin par lequel il peut être pneumatiquement comprimé dans l'encliquetage (16) et/ou sorti.

17. Transmission magnétique selon l'une quelconque des revendications 10 - *14, **caractérisée en ce que*** l'axe (15) est relié à un vérin par lequel il peut être électriquement ou électromagnétiquement comprimé dans l'encliquetage (16) et/ou sorti.
